# EUROPÄISCHE PATENTSCHRIFT

(11) **EP 2 884 128 B1**
(45) Veröffentlichungstag und Bekanntmachung des Hinweises auf die Patenterteilung: **09.06.2021**
(21) Anmeldenummer: 14198039.1
(22) Anmeldetag: 15.12.2014
(51) Int. Cl.: F16C 33/46, F16C 33/66

(54) **Käfig für ein Wälzlager sowie Rollenlager mit einem Käfig**
Cage for a rolling bearing, and roller bearing with a cage
Cage pour un palier à roulement et palier à rouleaux doté d'une cage

(30) Priorität: 16.12.2013 DE 102013226132
(43) Veröffentlichungstag der Anmeldung: 17.06.2015
(73) Patentinhaber: Aktiebolaget SKF, 415 50 Göteborg (SE)
(72) Erfinder: Gruell, Robert, 97528 Sulzdorf (DE); Stanzel, Rainer, 97447 Gerolzhofen (DE)
(74) Vertreter: Kuhstrebe, Jochen

(56) Entgegenhaltungen:
- WO-A1-2005/031179
- WO-A1-2007/049450
- DE-A1- 10 152 847
- DE-A1- 19 758 254
- DE-A1-102009 048 952
- DE-T5-112011 102 719
- JP-A- 2006 200 675
- JP-A- 2007 154 936
- JP-A- 2008 291 921
- JP-A- 2011 196 513

## Beschreibung

Ausführungsbeispiele beziehen sich auf einen Käfig für ein Wälzlager und ein Wälzlager mit dem Käfig.

Als Wälzlager mit einer hohen Tragzahl werden sogenannte vollrollige Rollenkränze oder Rollenlager verwendet. Vollrollige Wälzlager ergeben rechnerisch die höchste Tragzahl. Bei einem vollrolligen Lager sind so viele Wälzkörper in dem Wälzlager angeordnet, dass die Summe der Einzeldurchmesser der Wälzkörper fast einen Teilkreisdurchmesser des Wälzlagers ergibt. Dazu wird bei vielen konventionellen vollrolligen Wälzlagern kein Käfig verwendet. Bei vollrolligen Lagern berühren sich die Rollen. Es könnte also eine Reibung zwischen den Rollen auftreten. Die Gefahr einer sog. Anschmierungen der Rollen könnte sich erhöhen. Dies kann u.U. zu einer Verkürzung der Lebensdauer des Wälzlagers führen. Solche vollrolligen Wälzlager oder Rollenkränze werden beispielsweise zur Lagerung der Planeten in einem mobilen Planetenradgetriebe eingesetzt.

Für andere Anwendungen im Bereich der Windkraftgetriebe werden sog. High-Capacity-Zylinderrollenlager (von engl.: "hohe dynamische Tragfähigkeit") eingesetzt. Diese können ebenfalls vollrollig ausgebildet bzw. eine maximale Rollenzahl aufweisen. Die Wälzkörper sind aber bei diesen konventionellem Zylinderrollenlager durch einen schulter- oder laufbahngeführten Käfig auf einem minimalen Abstand gehalten. Dadurch könnte ein Anschmierungsrisiko durch einen direkten Rolle-Rolle-Kontakt vermieden werden. Für große Zylinderrollenlager, wie sie beispielsweise in Windkraftgetrieben und großen Planetenradgetrieben zum Einsatz kommen, werden dazu Stahlblech- oder Messingmassivkäfige verwendet.

Für kleine Lager sind die konventionellen Lösungen zum einen unwirtschaftlich. Zum anderen führt das Verkleinern konventioneller vollrolliger Lager mit einem laufbahngeführten Käfig, wie sie in großen Dimensionen im Bereich der Windkraftgetriebe eingesetzt werden dazu, dass kein ausreichender Öl- oder Schmiermittelfluss mehr möglich ist. Dieser Effekt ist unerwünscht.

DE 101 52 847 A1 beschreibt ein Rollenlager mit einem inneren Ring, der eine äußere Oberfläche aufweist, einem äußeren Ring, der eine innere Oberfläche aufweist, einer Vielzahl von Rollenelementen, die drehbar zwischen dem inneren Ring und dem äußeren Ring angeordnet sind, und einer Haltevorrichtung für das Halten der Rollenelemente. Die Haltevorrichtung ist aus einem Harzmaterial hergestellt und sie ist in Bezug auf die innere Oberfläche des äußeren Rings oder die äußere Oberfläche des inneren Rings positioniert. Die Haltevorrichtung umfasst ein Paar ringförmiger Abschnitte, die axial parallel angeordnet sind, und einen säulenförmigen Teil, der die ringförmigen Abschnitte verbindet.

DE 197 58 254 A1 beschreibt einen Käfig für ein Rollenlager mit einem Käfigkamm, der einen seitlichen Ring mit axialen Stegen zur Halterung von Lagerrollen aufweist, und einem auf die freien axialen Enden der Stege aufgesetzten Käfigdeckel.

Es besteht daher ein Bedarf daran, einen Kompromiss zwischen einer Erhöhung der Tragfähigkeit eines Wälzlagers, dem Vermeiden dass Wälzköper aneinander reiben und einer ausreichenden Schmiermittelzufuhr zu verbessern. Diesem Bedarf tragen die unabhängigen Ansprüche 1 und 8 Rechnung.

Ausführungsbeispiele betreffen einen Käfig für ein Wälzlager, wobei das Wälzlager ein Zylinderrollenlager ist. Der Käfig umfasst einen ersten und einen zweiten in eine Umfangsrichtung angeordneten Seitenring. Ferner weist der Käfig eine Mehrzahl von Stegen auf. Die Stege verbinden die Seitenringe. Dabei wird eine Mehrzahl von Taschen zur Aufnahme von Wälzkörpern ausgebildet. Die Stege sind auf einem anderen Durchmesser als einem Teilkreisdurchmesser des Wälzlagers angeordnet. Ferner weist der Käfig zumindest eine Führungsfläche auf. Die Führungsfläche ist ausgebildet, um den Käfig an einer Lauffläche des Wälzlagers radial zu führen. Der Käfig ist nicht selbsthaltend, wobei bei einem außenringgeführten Käfig ein Innendurchmesser des Stegs größer ist als der Teilkreisdurchmesser des Wälzlagers und bei einem innenringgeführten Käfig ein Außendurchmesser des Stegs kleiner ist als der Teilkreisdurchmesser des Wälzlagers. Der Käfig umfasst auch eine Ausnehmung in der Führungsfläche. Die Ausnehmung durchdringt den Käfig in radialer Richtung nicht. In axialer Richtung erstreckt sich die Ausnehmung zumindest abschnittsweise von einer axialen Stirnkante des Seitenrings über eine Breite des Käfigs, sodass ein Schmiermittelfluss entlang der Ausnehmung auf die Taschen möglich ist. Dabei sind der Käfig und ein Material des Käfigs so ausgebildet, dass sich die Wälzkörper in allen normalen Betriebszuständen gerade nicht berühren. Ferner ist die zumindest eine Ausnehmung im Bereich der Stege angeordnet, und außerhalb der zumindest einen Ausnehmung ist eine Oberfläche der Seitenringe als Führungsfläche ausgebildet. Des Weiteren weist die Ausnehmung in einem Bereich des Stegs eine Breite auf, die einer Breite des Stegs entspricht.

Dadurch, dass der Käfig an der Führungsfläche eine Ausnehmung aufweist, kann bei manchen Ausführungsbeispielen ermöglicht werden, dass die Wälzkörper in einem Wälzlager voneinander beabstandet positioniert werden können und trotzdem ein ausreichender Ölfluss oder Schmiermittelfluss an den Laufflächen der Wälzkörper und an den Laufflächen des Außen- oder Innenrings ermöglicht werden kann. Dies könnte dann der Fall sein, wenn das Schmiermittel in axialer Richtung seitlich zwischen den Innen- und Außenring eingebracht wird. In diesen Fällen kann das Schmiermittel von der axialen Stirnkante des Seitenrings entlang der Ausnehmung fließen. Wenn sich die Wälzkörper und der Käfig in Umfangsrichtung bewegen, wird das Schmiermittel entlang den Laufflächen transportiert.

Ein Teilkreisdurchmesser ist dabei ein Durchmesser, auf dem die Mittelpunkte der Wälzkörper angeordnet sind. Beispielsweise kann die Mehrzahl der Stege in radialer Richtung, zumindest entlang einer axialen Ausdehnung des Wälzkörpers, vollständig außerhalb des Teilkreises angeordnet sein. Die Stege können eventuell auch entlang ihrer gesamten axialen Ausdehnung vollständig außerhalb des Teilkreise angeordnet sein.

Bei einigen weiteren Ausführungsbeispielen sind die Stege parallel zueinander und parallel zu einer axialen Richtung des Käfigs angeordnet. Beispielsweise kann der Käfig zum Führen der Wälzkörper in einem Zylinderrollenlager eingesetzt werden.

Bei einigen weiteren Ausführungsbeispielen kann das Wälzlager ein Rollenkranz sein.

Bei der axialen Stirnkante des Seitenrings handelt es sich um eine Fläche, die in eine axiale Richtung des Käfigs gerichtet ist. Beispielsweise kann die Stirnkante auch um einen Winkel gegenüber der axialen Richtung geneigt sein. Der Winkel liegt in einem Wertebereich. Der Wertebereich weist einen Anfangswert und einen Endwert auf. Beispielsweise können der Anfangswert und/oder der Endwert 0°, 1°, 2°, 5°oder 10° betragen. Dadurch kann bei manchen Ausführungsbeispielen ermöglicht werden, dass bei einer Rotation des Käfigs das Schmiermedium in ein Inneres des Lagers geleitet wird. Dies kann beispielsweise durch eine Pumpwirkung bzw. Fliehkräfte bewirkt werden.

Bei einigen weiteren Ausführungsbeispielen erstreckt sich die Ausnehmung vollständig über eine Breite des Käfigs. Eine Breite des Käfigs ist eine Ausdehnung des Käfigs in eine axiale Richtung. So kann bei manchen Ausführungsbeispielen ermöglicht werden, dass das Schmiermittel nur von einer Seite in das Wälzlager eingebracht werden muss und entlang der Ausnehmung, die sich über die gesamte Breite des Käfigs erstreckt, das Wälzlager entlang seiner gesamten Breite schmiert. Beispielsweise kann die Ausnehmung nur an den Stegen bzw. in Umfangsrichtung überlappend mit den Stegen und an den Seitenringen nur in einem Bereich, der in axialer Richtung an den Steg anschließt, angeordnet sein. Außerhalb der Ausnehmung kann eine Oberfläche der Seitenringe, die zu der Lauffläche gewandt ist, vollständig als Führungsfläche ausgebildet sein. Dazu kann die Oberfläche der Seitenringe, die der Lauffläche zugewandt ist, außerhalb der Ausnehmung frei von Vertiefungen sein und/oder einen einheitlichen Durchmesser aufweisen.

Bei einigen weiteren Ausführungsbeispielen kann die Ausnehmung durch eine Rippe unterbrochen sein. Die Rippe kann den gleichen Durchmesser wie die Seitenringe aufweisen. So kann bei manchen Ausführungsbeispielen beispielsweise ermöglicht werden, dass die Rippe zu einer zusätzlichen Führung auf der Laufbahn genutzt werden kann. Beispielsweise kann in diesen Fällen das Schmiermedium bzw. das Schmiermittel von zwei Seiten eingebracht werden.

Bei einigen weiteren Ausführungsbeispielen ist der Käfig ausgebildet, um an einer Innenlaufbahn des Zylinderrollenlagers geführt zu werden. Dadurch weist der Käfig einen kleineren Durchmesser auf als ein außenlaufbahngeführter Käfig. Auch ein Gewicht des Käfigs könnte dann reduziert sein.

Bei einigen weiteren Ausführungsbeispielen ist die Ausnehmung in radialer Richtung zumindest abschnittsweise innerhalb des Stegs angeordnet. Dadurch kann bei manchen Ausführungsbeispielen eine ausreichende Schmierung an der Innenringlaufbahn ermöglicht werden.

Bei einigen weiteren Ausführungsbeispielen ist der Käfig ausgebildet, um an einer Außenlaufbahn des Zylinderrollenlagers geführt zu werden. Dadurch könnte der Käfig einen größeren Durchmesser aufweisen als ein innenlaufbahngeführter Käfig. Eine Stabilität des Käfigs könnte so erhöht werden und/oder auch die Anzahl der Wälzkörper im Vergleich zu einem Innenringlaufbahn geführten Käfig bei gleichem Teilkreis und gleichen Wälzkörperabmessungen.

Ferner weist die Ausnehmung in einem Bereich des Stegs eine Breite auf, die einer Breite des Stegs entspricht. Dabei ist die Breite der Ausnehmung eine Ausdehnung der Ausnehmung in eine Umfangsrichtung. Analog ist die Breite des Stegs eine Ausdehnung des Stegs in eine Umfangsrichtung des Käfigs. So kann bei manchen Ausführungsbeispielen ermöglicht werden, dass das Schmiermittel von dem Steg direkt in die Tasche laufen kann..

Bei einigen weiteren Ausführungsbeispielen kann die Ausnehmung in einer Mehrzahl von Stegen angeordnet sein. Beispielsweise kann die Ausnehmung in jedem der Stege oder auch nur in jedem zweiten, jedem dritten, jedem vierten oder jedem fünftem, etc. Steg angeordnet sein. Dadurch, dass beispielsweise nicht alle Stege die Ausnehmung aufweisen, kann bei manchen Ausführungsbeispielen eine Stabilität des Käfigs erhöht sein und trotzdem noch ein ausreichender Schmiermittelfluss ermöglicht werden.

Ergänzend oder alternativ kann die Ausnehmung auch in dem Bereich des zumindest einen Seitenrings eine Breite aufweisen, die der Breite der Ausnehmung in dem Bereich des Stegs entspricht.

Bei einigen weiteren Ausführungsbeispielen weist der Käfig einen Durchmesser auf, der in einem Wertebereich liegt. Der Wertebereich weist einen Anfangs- und einen Endwert auf. Anfangs- und Endwerte des Wertebereichs können 10 mm, 20 mm, 30 mm, 40 mm, 50 mm, 55 mm, 60 mm, 70 mm, 80 mm, 100 mm, 150 mm, 200 mm und/oder 250 mm sein. So kann bei manchen Ausführungsbeispielen ein Käfig für ein Lager mit einem relativ kleinen Durchmesser hier bereitgestellt werden. Beispielsweise können solche Lager zum drehbaren Lagern von kleinen mobilen Planetengetrieben eingesetzt werden. Beispielsweise könnte so der Schmiermittelfluss auch in vollrolligen Lagern mit kleinen Durchmessern ermöglicht werden.

Bei einigen weiteren Ausführungsbeispielen ist der Käfig aus wenigstens einem Kunststoffspritzgussteil aufgebaut. So kann in manchen Fällen die Herstellung des Käfigs vereinfacht sein. Ferner kann der Käfig bei manchen Ausführungsbeispielen aus einer Mehrzahl von Käfigsegmenten ausgebildet sein. Mit anderen Worten ausgedrückt, kann der Käfig segmentiert ausgebildet sein. Dadurch könnte beispielsweise eine Montierbarkeit des Käfigs vereinfacht werden.

Bei einigen weiteren Ausführungsbeispielen weist die Ausnehmung eine Tiefe auf, die geringer ist als eine Dicke des Seitenrings. Dabei ist eine Tiefe der Ausnehmung eine Ausdehnung der Ausnehmung in eine radiale Richtung. Analog ist eine Dicke des Seitenrings eine Ausdehnung des Seitenrings in eine radiale Richtung. Beispielsweise können die Seitenringe unterschiedliche Dicken aufweisen. Bei diesen Ausführungsbeispielen kann die Ausnehmung eine Tiefe aufweisen, die geringer ist als eine Dicke des Seitenrings mit der geringeren Dicke. Beispielsweise kann die Ausnehmung eine Tiefe aufweisen, die maximal 50% der Dicke des Seitenrings entspricht. So kann bei manchen Ausführungsbeispielen ein Kompromiss zwischen einer Stabilität des Seitenrings und einer ausreichend großen Ausnehmung für einen benötigten Schmiermittelfluss verbessert sein.

Bei einigen weiteren Ausführungsbeispielen weist zumindest einer der Seitenringe einen durchgängigen Materialbereich auf, der auf einem Durchmesser liegt. So kann bei manchen Ausführungsbeispielen der Käfig eine ausreichende Stabilität erhalten. Mit anderen Worten ausgedrückt, kann beispielsweise eine nach radial innen oder eine nach radial außen zeigende Fläche des Seitenrings durchgehend den gleichen Durchmesser aufweisen.

Bei einigen weiteren Ausführungsbeispielen erstrecken sich die Stege ausgehend von den Seitenringen in radialer Richtung weg von der Führungsfläche, weiter in eine radiale Richtung von den Seitenringen. So kann bei manchen Ausführungsbeispielen eine Stabilität des Käfigs erhöht sein. Dies kann ggf. möglich sein, weil die Stege einen möglichst großen Querschnitt aufweisen. Bei manchen Ausführungsbeispielen erstrecken sich die Stege nur soweit in die radiale Richtung, dass sie die Wälzlager nicht unnötig weit voneinander beabstanden.

Ferner werden die Stege bei einigen weiteren Ausführungsbeispielen an ihren zu dem Wälzkörpermittelpunkt zeigenden Enden immer dünner. Dadurch könnte ermöglicht werden, dass ein Abstand zwischen den Wälzkörpern so klein wie möglich gehalten werden kann. Beispielsweise kann der Abstand so gewählt sein, dass sich die Wälzkörper gerade noch nicht berühren. Aus fertigungstechnischen Gründen erstrecken sich die Stege bei manchen Ausführungsbeispielen nur so weit bis zu dem Mittelpunkt der Wälzkörper bzw. weisen eine entsprechende Wandstärke auf, solange diese gut zu entformen bzw. herzustellen ist.

Dabei sind der Käfig und ein Material des Käfigs so ausgebildet, dass sich die Wälzkörper in allen normalen Betriebszuständen gerade nicht berühren. So kann ermöglicht werden, dass so viele Wälzkörper in dem Wälzlager aufgenommen werden können, dass die Summe der einzelnen Durchmesser der Wälzkörper fast einem Durchmesser entspricht, auf dem die Mittelpunkte der Wälzlager angeordnet sind. Beispielsweise kann ein minimaler Abstand zwischen zwei direkt nebeneinander angeordneten Wälzkörpern größer gleich 1% des Wälzkörperdurchmessers sein. Mit anderen Worten ausgedrückt, ist der Käfig ausgebildet, um die Wälzkörper in einem vollrolligen Lager so voneinander zu beabstanden, dass sie nicht aneinander anschmieren oder reiben. Normale Betriebszustände können dabei Betriebszustände mit unterschiedlichen Temperaturen sein, die beispielsweise eine Ausdehnung des Käfigs bewirken könnten. Ferner können normale Betriebszustände auch unterschiedliche Kräfte umfassen, die ggf. zu einer ungleichmäßigen Belastung des Käfigs und/oder des Lagers führen könnten. Mit anderen Worten ausgedrückt, sind der Käfig und das Material des Käfigs bei manchen Ausführungsbeispielen hinsichtlich ihrer Deformationseigenschaften so ausgebildet, dass sie die Wälzkörper in den beschriebenen Abständen halten können.

Einige Ausführungsbeispiele betreffen ein Zylinderrollenlager mit einem Käfig nach zumindest einem der beschriebenen Ausführungsbeispiele. Der Käfig ist an einer der Laufbahnen des Rollenlagers geführt. Ferner ist der Käfig so ausgebildet, um eine maximale Anzahl an Wälzkörpern aufzunehmen. So könnte beispielsweise ein Rollenlager mit einer hohen Tragzahl und einer erhöhten Lebensdauer bereitgestellt werden. Dies könnte möglich sein, weil bei manchen Ausführungsbeispielen verhindert werden kann, dass die Wälzkörper sich gegenseitig berühren. Mit maximaler Anzahl an Wälzkörpern ist dabei die Menge an Wälzkörpern gemeint, die in dem Wälzlager untergebracht werden können, ohne sich gegenseitig zu berühren. Das heißt, es könnten so viele Wälzkörper in dem Lager angeordnet sein, dass die Summe der Durchmesser der Wälzkörper fast einem Durchmesser, auf dem die Mittelpunkte der Wälzkörper laufen, entspricht. Die Summe kann etwas geringer sein, um so viel Abstand vorzusehen, dass sich die Wälzkörper gerade nicht berühren. Die Laufbahn kann sich beispielweise an einem bordfreien Bauteil, beispielsweise einem Lagerring oder einem Gehäuse oder in einer Bohrung befinden. Beispielsweise kann der Käfig an einer radial außenliegenden Lauffläche geführt sein.
Weitere vorteilhafte Ausgestaltungen werden nachfolgendend anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt eine schematische Darstellung einer perspektivischen Ansicht eines Käfigs für ein Wälzlager gemäß einem Ausführungsbeispiel; und
Fig. 2 zeigt eine schematische Querschnittsdarstellung eines Rollenkranzes gemäß einem weiteren Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

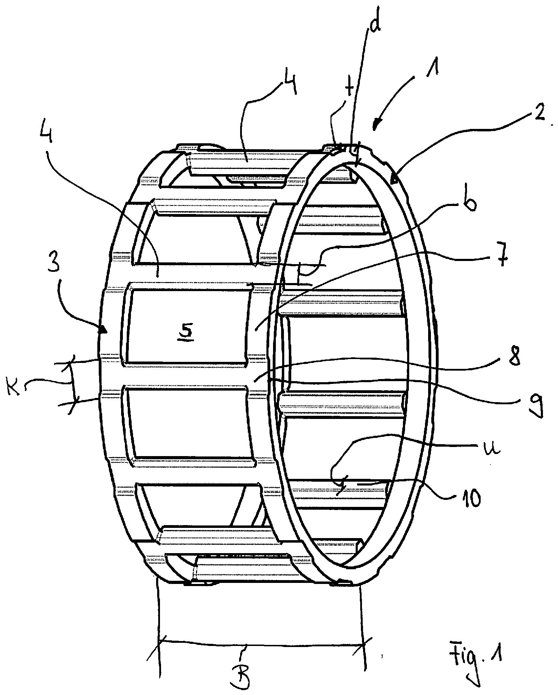

Fig. 1 zeigt eine schematische Darstellung einer perspektivischen Ansicht eines Käfigs für ein Wälzlager gemäß einem Ausführungsbeispiel.

Wie in Fig. 1 dargestellt, umfasst ein Käfig für ein nicht dargestelltes Wälzlager einen ersten Seitenring 2 und einen zweiten Seitenring 3. Der Käfig 1 umfasst auch eine Mehrzahl von Stegen 4. Die Stege 4 verbinden die Seitenringe 2 und 3. Dadurch werden eine Mehrzahl von Taschen 5 zur Aufnahme von nicht dargestellten Wälzkörpern ausgebildet. Die Stege 4 sind auf einem anderen Durchmesser als einem Teilkreisdurchmesser des Wälzlagers angeordnet. Ferner umfasst der Käfig 1 zumindest eine Führungsfläche 7. Die Führungsfläche 7 ist ausgebildet, um den Käfig 1 an einer nicht dargestellten Lauffläche des nicht dargestellten Wälzlagers radial zu führen. Der Käfig 1 weist auch zumindest eine Ausnehmung 8 in der Führungsfläche 7 auf. Die Ausnehmung 8 durchdringt den Käfig 1 in radialer Richtung nicht. In axialer Richtung erstreckt sich die Ausnehmung 8 zumindest abschnittsweise von einer axialen Stirnkante 9 über eine Breite B des Käfigs 1, sodass ein Schmiermittelfluss entlang der Ausnehmung 8 auf die Taschen 5 möglich ist.

Die Ausnehmung 8 erstreckt sich bei dem Ausführungsbeispiel der Fig. 1 vollständig über eine Breite des Käfigs 1. Die Ausnehmung 8 weist eine Breite b auf, die einer Breite b des Stegs 4 entspricht. Dabei ist eine Breite b des Stegs 4 eine Ausdehnung des Stegs in eine Umfangsrichtung.

In einem Bereich der Seitenringe 2 und 3 weist die Ausnehmung 8 jeweils eine Breite K auf. Die Breite K der Ausnehmung 8 in dem Bereich der Seitenringe 2 und 3 ist größer als eine Breite b des Stegs 4. Der Käfig 1 des Ausführungsbeispiels der Figur 1 ist ausgebildet, um an einer Laufbahn eines nicht dargestellten Außenrings eines Wälzlagers geführt zu werden. Dazu liegt die Führungsfläche 7 an der Laufbahn des Außenrings an. Die Ausnehmung 8 weist eine Tiefe t auf. Dabei ist eine Tiefe t der Ausnehmung 8 eine Ausdehnung der Ausnehmung in eine radiale Richtung. Die Tiefe t ist geringer ausgebildet als eine Dicke d zumindest einer der Seitenringe 2 oder 3. Dabei ist die Dicke d eine Ausdehnung einer der Seitenringe 2 oder 3 in eine radiale Richtung. Bei dem Ausführungsbeispiel der Fig. 1 sind die Seitenringe 2 und 3 jeweils so ausgebildet, dass ihre nach radial innen gerichtete Fläche auf einem gemeinsamen Durchmesser liegt.

Die Stege 4 weisen bei dem Ausführungsbeispiel der Fig. 1 einen im Wesentlichen trapezförmigen Querschnitt auf. Eine radial nach innen weisende Fläche 10 des Steges 4 weist dabei eine geringere Breite u als die Breite b des Stegs 4 auf. So könnte ermöglicht werden, dass die Stege 4 eine hohe Stabilität besitzen. Ferner könnte auch zugelassen werden, dass die Wälzkörper nur so weit voneinander beabstandet sind, dass sie sich gerade nicht mehr berühren. Die Stege 4 können bei anderen Ausführungsbeispielen eine Dreiecksform aufweisen und fast bis zu einem Mittelpunkt der Wälzkörper ragen. Aus fertigungstechnischen Gründen erstrecken sich die Stege bei dem Ausführungsbeispiel der Fig. 1 jedoch nur soweit, bis sie an ihrer Fläche 10 eine Breite u erreichen, die fertigungstechnisch gut herstellbar ist. Nach radial innen weisen die Seitenringe 2 und 3 eine geringere Ausdehnung auf als die Stege 4.

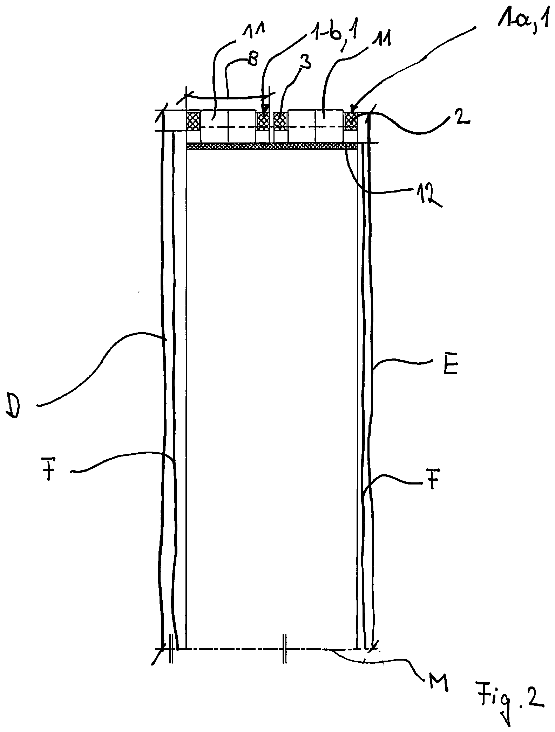

Fig. 2 zeigt eine schematische Querschnittsdarstellung eines Rollenkranzes mit zwei Käfigen gemäß dem Ausführungsbeispiel.

Wie in Fig. 2 gezeigt, können bei einem Rollenkranz 13 eine Mehrzahl von Wälzkörpern 11 zweireihig auf einer Montagehülse 12 angeordnet werden. Dabei ist jede Reihe von Wälzkörpern 11 mit einem Käfig 1a und 1b gemäß dem Ausführungsbeispiel geführt. Die Käfige 1a und 1b sind in axialer Richtung nebeneinander angeordnet.

Bei einigen weiteren Ausführungsbeispielen können Käfige auch einzeln eingesetzt werden. Ein Rollenkranz kann dann nur eine Reihe von Wälzkörpern aufweisen.

Bei dem Ausführungsbeispiel laufen die Wälzkörper 11 auf einer Innenlauffläche mit einem Durchmesser f. Der Durchmesser f kann in einem Bereich zwischen 30 mm und 40 mm liegen. Der Käfig 1a weist einen Außendurchmesser E auf. Der Außendurchmesser E beträgt etwa 54,75 mm. Die Wälzkörper 11 laufen auf einer Außenlauffläche mit einem Durchmesser D. Der Durchmesser D ist etwa 55 mm. Der Käfig 1 weist also einen geringeren Durchmesser auf, als eine Lauffläche, an der er geführt ist. Der Unterschied zwischen dem Außendurchmesser des Käfigs E und dem Durchmesser der Außenlauffläche D wird vorgesehen, um ein Wachsen des Käfigs bei einer Temperaturerhöhung zu ermöglichen. Der Käfig weist einen Innendurchmesser F zwischen 40 mm und 50 mm auf.

Bei einigen weiteren, nicht dargestellten Ausführungsbeispielen können ein Innendurchmesser des Käfigs, ein Außendurchmesser des Käfigs und/oder die Laufbahnen einen Durchmesser aufweisen, der in einem Wertebereich liegt. Der Wertebereich weist einen Anfangswert und einen Endwert auf. Beispielsweise kann der Anfangswert und/oder der Endwert sein: 5 mm, 10 mm, 20 mm, 30 mm, 40 mm, 50 mm, 55 mm, 60 mm, 70 mm 80 mm, 100 mm, 150 mm, 200 mm und/oder 250mm.

Mit anderen Worten ausgedrückt, handelt es sich bei dem Käfig 1 um einen außenringlaufbahngeführten Verteilerkäfig, bei dem die Rollen bzw. Wälzkörper außen in dem Käfig 1gehalten werden. Der Käfig 1 gemäß dem Ausführungsbeispiel der Fig. 1 und 2 eignet sich für ein Zylinderrollenlager oder einen Rollenkranz. Bei den Wälzkörpern 11 handelt es sich um Zylinderrollen.

Der Käfig 1 kann beispielsweise in Lagern kleiner mobiler Planetengetriebe eingesetzt werden, die in hohen Stückzahlen produziert werden. Durch die Ausnehmungen an dem Durchmesser und die zurückgesetzten Seitenringe 2 und 3 in einem Vergleich zu den Käfigstegen 4 kann bei manchen Ausführungsbeispielen genügend Freiraum für einen ausreichenden Öldurchfluss ermöglicht werden, auch wenn das Lager einen kleinen Durchmesser aufweist und der Raum dadurch begrenzt ist.

Bei dem Käfig 1 handelt es sich um einen außenringlaufbahngeführten Kunststoffkäfig. Der Käfig 1 ist nicht selbsthaltend. Das bedeutet, dass ein Innendurchmesser des Käfigsteges 4 größer ist als der Teilkreisdurchmesser des Wälzlagers. So kann die maximale Wälzkörperanzahl erreicht werden. Es kann also die maximal mögliche Wälzkörperanzahl durch ein spezielles Käfigdesign ermöglicht werden. Durch die Ausnehmungen an dem Außendurchmesser der Seitenringe oder Käfigseitenringe 2 und 3 und einen vergrößerten Innendurchmesser der Seitenringe 2 und 3 kann bei manchen Ausführungsbeispielen ein ausreichender oder sogar optimaler Öldurchfluss ermöglicht werden. Da der Käfig 1 die Wälzkörper auf Abstand hält, kann ferner ein Anschmierungsrisiko durch Rolle-Rolle-Kontakt vermieden werden. Es könnte also ein High-Capacity-Zylinderrollenlagerkäfig aus einem Kunststoffmaterial bereitgestellt werden. Diese können beispielsweise durch ein Spritzgussverfahren hergestellt werden.

Käfige gemäß den Ausführungsbeispielen können in allen möglichen Anwendungen eingesetzt werden. Beispielsweise eignen sich Käfige für Rollenkränze oder Wälzlager mit kleinen Rollen- und Teilkreisdurchmessern. Dadurch könnten beispielsweise kostengünstig und technisch machbare Lösungen bereitgestellt werden. Ein besonderer Einsatzfall des Käfigs kann als außenringlaufbahngeführter Käfig für ein Zylinderrollenlager sein. Der 12

Käfig kann in allen möglichen Wälzlagern eingesetzt sein. Wälzlager mit dem Käfig können in beispielsweise zu Planetenradlagerung eingesetzt werden. Weitere Anwendungsfälle können alle möglichen Anwendungen in Fahrzeugen (z.B. Lastkraftwagen, Personenkraftwagen), Werkzeug- oder Arbeitsmaschinen sein. Ferner eignen sich die Käfige zum Einsatz in kleinen Rollenkränzen oder Lagern mit einem Käfigdurchmesser bis ca. 250 mm. Ein weiteres Einsatzgebiet kann in Getrieben jedweder Art sein.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden Die Erfindung beschränkt sich auf die vorliegenden Ansprüche.

### Bezugszeichenliste

- 1: Käfig
- 2: erster Seitenring
- 3: zweiter Seitenring
- 4: Steg
- 5: Tasche
- 7: Führungsfläche
- 8: Ausnehmung
- 9: Stirnkante
- 10: Stegfläche radial innen
- 11: Wälzkörper
- 12: Montagehülse
- 13: Rollenkranz

- M: axiale Richtung
- B: Breite Käfig
- b: Breite Steg
- K: Breite Ausnehmung
- g: Dicke
- u: Breite Steg
- D: Durchmesserlauffläche außen
- E: Außendurchmesser Käfig
- f: Innenlauffläche
- F: Innendurchmesser Käfig
- d: Dicke des Seitenrings

## Patentansprüche

1. Käfig (1) für ein Wälzlager mit folgenden Merkmalen:
- einem ersten und einem zweiten in Umfangsrichtung angeordneten Seitenring (2, 3); und
- zumindest einer Führungsfläche (7), die ausgebildet ist, um den Käfig (1) an einer Lauffläche des Wälzlagers radial zu führen; und
- einer Mehrzahl von Stegen (4), die die Seitenringe (2, 3) verbinden, sodass eine Mehrzahl von Taschen (5) zur Aufnahme von Wälzkörpern (11) ausbildet ist; wobei die Stege (4) auf einem anderen Durchmesser als einem Teilkreisdurchmesser des Wälzlagers angeordnet sind, wobei das Wälzlager ein Zylinderrollenlager ist;
**dadurch gekennzeichnet, dass** der Käfig nicht selbsthaltend ist, wobei bei einem außenringgeführten Käfig ein Innendurchmesser des Stegs größer ist als der Teilkreisdurchmesser des Wälzlagers und bei einem innenringgeführten Käfig ein Außendurchmesser des Stegs kleiner ist als der Teilkreisdurchmesser des Wälzlagers; und
- zumindest einer Ausnehmung (8) in der Führungsfläche (7), wobei die Ausnehmung (8) den Käfig (1) in radialer Richtung nicht durchdringt und sich in axialer Richtung zumindest abschnittweise von einer axialen Stirnkante (9) des Seitenrings (2, 3) über eine Breite (B) des Käfigs (1) erstreckt, sodass ein Schmiermittelfluss entlang der Ausnehmung (8) auf die Taschen (5) möglich ist,
- der Käfig (1) und ein Material des Käfigs (1) so ausgebildet sind, dass sich die Wälzkörper (11) in allen normalen Betriebszuständen gerade nicht berühren,
- die zumindest eine Ausnehmung (8) im Bereich der Stege (4) angeordnet ist,
- außerhalb der zumindest einen Ausnehmung (8) eine Oberfläche der Seitenringe (2, 3) als Führungsfläche (7) ausgebildet ist, und
- die Ausnehmung (8) in einem Bereich des Stegs (4) eine Breite (b) aufweist, die einer Breite des Stegs (4) entspricht.

2. Käfig (1) nach Anspruch 1, wobei die Ausnehmung (8) in radialer Richtung zumindest abschnittsweise innerhalb oder außerhalb des Stegs (4) angeordnet ist.

3. Käfig (1) nach einem der vorhergehenden Ansprüche, wobei die Ausnehmung (8) zumindest in einem Bereich des Seitenringes (2, 3) eine größere Breite (K) als der Steg (4) aufweist.

4. Käfig (1) nach einem der vorhergehenden Ansprüche, wobei der Käfig (1) einen Durchmesser (E) von 5 mm bis 250 mm aufweist.

5. Käfig (1) nach einem der vorhergehenden Ansprüche, wobei der Käfig (1) aus wenigstens einem Kunststoffspritzgussteil aufgebaut ist.

6. Käfig (1) nach einem der vorhergehenden Ansprüche, wobei die Ausnehmung (8) eine Tiefe (t) entlang der radialen Richtung aufweist, die geringer ist als eine Dicke (d) des Seitenrings (2, 3) ist.

7. Käfig (1) nach einem der vorhergehenden Ansprüche, wobei sich die Stege (4) ausgehend von den Seitenringen (2, 3) in radialer Richtung weg von der Führungsfläche (7) weiter in radiale Richtung als zumindest einer der Seitenringe (2, 3) erstrecken.

8. Zylinderrollenlager mit
einem Käfig (1) nach einem der vorhergehenden Ansprüche 1 bis 7.

## Claims

1. Cage (1) for a rolling-contact bearing, having the following features:
- a first and a second side ring (2, 3), arranged in the circumferential direction; and
- at least one guide surface (7), which is designed to guide the cage (1) radially on a running surface of the rolling-contact bearing; and
- a plurality of crosspieces (4), which connect the side rings (2, 3), this resulting in the formation of a plurality of pockets (5) for accommodating rolling-contact bodies (11); wherein the crosspieces (4) are arranged on a diameter other than a pitch diameter of the rolling-contact bearing, wherein the rolling-contact bearing is a cylindrical roller bearing;
**characterized in that** the cage is not self-retaining, wherein, in the case of an outer-ring-guided cage, an internal diameter of the crosspiece is greater than the pitch diameter of the rolling-contact bearing and, in the case of an inner-ring-guided cage, an external diameter of the crosspiece is smaller than the pitch diameter of the rolling-contact bearing; and
- at least one recess (8) in the guide surface (7), wherein the recess (8) does not penetrate the cage (1) in the radial direction and, in the axial direction, extends over a width (B) of the cage (1), at least in part, from an axial end edge (9) of the side ring (2, 3), it therefore being possible for lubricant to flow along the recess (8) onto the pockets (5),
- the cage (1) and a material of cage (1) are formed such that, in all normal operating states, the rolling-contact bodies (11) are not quite in contact,
- the at least one recess (8) is arranged in the region of the crosspieces (4),
- outside the at least one recess (8), a surface of the side rings (2, 3) is designed in the form of a guide surface (7), and
- in a region of the crosspiece (4), the recess (8) has a width (b) which corresponds to a width of the crosspiece (4).

2. Cage (1) according to Claim 1, wherein, in the radial direction, the recess (8) is arranged, at least in part, inside or outside the crosspiece (4).

3. Cage (1) according to either of the preceding claims, wherein, at least in a region of the side ring (2, 3), the recess (8) has a greater width (K) than the crosspiece (4).

4. Cage (1) according to one of the preceding claims, wherein the cage (1) has a diameter (E) of 5 mm to 250 mm.

5. Cage (1) according to one of the preceding claims, wherein the cage (1) is made from at least one plastic injection moulding.

6. Cage (1) according to one of the preceding claims, wherein the recess (8) has a depth (t), along the radial direction, which is smaller than a thickness (d) of the side ring (2, 3).

7. Cage (1) according to one of the preceding claims, wherein, starting from the side rings (2, 3), the crosspieces (4) extend radially away from the guide surface (7) to a greater extent in the radial direction than at least one of the side rings (2, 3).

8. Cylindrical roller bearing having a cage (1) according to one of the preceding Claims 1 to 7.

## Revendications

1. Cage (1) pour un palier à roulement présentant les caractéristiques suivantes :
- une première et une deuxième bague latérale (2, 3) disposées dans la direction circonférentielle ; et
- au moins une surface de guidage (7) qui est réalisée pour guider radialement la cage (1) sur une surface de roulement du palier à roulement ; et
- une pluralité d'entretoises (4) qui relient les bagues latérales (2, 3) de façon à réaliser une pluralité de poches (5) destinées à recevoir des éléments roulants (11) ; les entretoises (4) étant disposées sur un diamètre différent d'un diamètre primitif de référence du palier à roulement, le palier à roulement étant un roulement à rouleaux cylindriques ;
**caractérisée en ce que** la cage est dissociable, dans laquelle, pour une cage guidée par une bague extérieure, un diamètre intérieur de l'entretoise est supérieur au diamètre primitif de référence du palier à roulement, et pour une cage guidée par une bague intérieure, un diamètre extérieur de l'entretoise est inférieur au diamètre primitif de référence du palier à roulement ; et
- au moins un évidement (8) dans la surface de guidage (7), l'évidement (8) ne traversant pas la cage (1) dans la direction radiale et s'étendant dans la direction axiale au moins par endroits d'un bord frontal axial (9) de la bague latérale (2, 3) sur une largeur (B) de la cage (1) de façon à permettre un flux de lubrifiant le long de l'évidement (8) sur les poches (5),
- la cage (1) et un matériau de la cage (1) étant réalisés de telle sorte que les éléments roulants (11) ne se touchent tout justement pas dans tous les états de fonctionnement ordinaires,
- ledit au moins un évidement (8) est disposé au niveau des entretoises (4),
- à l'extérieur dudit au moins un évidement (8), une surface de la bague latérale (2, 3) est réalisée sous la forme d'une surface de guidage (7), et
- l'évidement (8) présente au niveau de l'entretoise (4) une largeur (b) qui correspond à une largeur de l'entretoise (4).

2. Cage (1) selon la revendication 1, dans laquelle l'évidement (8) est disposé dans la direction radiale au moins par endroits à l'intérieur ou à l'extérieur de l'entretoise (4).

3. Cage (1) selon l'une quelconque des revendications précédentes, dans laquelle l'évidement (8) présente une largeur (K) supérieure à celle de l'entretoise (4), au moins au niveau de la bague latérale (2, 3).

4. Cage (1) selon l'une quelconque des revendications précédentes, dans laquelle la cage (1) présente un diamètre (E) de 5 mm à 250 mm.

5. Cage (1) selon l'une quelconque des revendications précédentes, dans laquelle la cage (1) est composée d'au moins une pièce moulée par injection de matière plastique.

6. Cage (1) selon l'une quelconque des revendications précédentes, dans laquelle l'évidement (8) présente une profondeur (t) le long de la direction radiale qui est inférieure à une épaisseur (d) de la bague latérale (2, 3) .

7. Cage (1) selon l'une quelconque des revendications précédentes, dans laquelle les entretoises (4) s'étendent, en partant des bagues latérales (2, 3), dans la direction radiale en s'éloignant de la surface de guidage (7) plus loin dans la direction radiale qu'au moins l'une des bagues latérales (2, 3).

8. Roulement à rouleaux cylindriques comprenant une cage (1) selon l'une quelconque des revendications précédentes 1 à 7.
